# EUROPÄISCHE PATENTSCHRIFT

(11) **EP 3 112 296 B1**
(45) Veröffentlichungstag und Bekanntmachung des Hinweises auf die Patenterteilung: **06.05.2020**
(21) Anmeldenummer: 15001926.3
(22) Anmeldetag: 29.06.2015
(51) Int. Cl.: B65G 15/42, A21C 9/08

(54) **FERTIGUNGSVORRICHTUNG MIT EINEM TRANSPORTBAND ZUR INDUSTRIELLEN FERTIGUNG VON TEIGSCHEIBEN AN EINEM FLIESSBAND**
PRODUCTION APPARATUS WITH A TRANSPORT BELT FOR INDUSTRIAL PRODUCTION OF DOUGH DISCS TO A PROCESSING LINE
DISPOSITIF DE FABRICATION COMPRENANT UNE BANDE DE TRANSPORT DESTINE A LA FABRICATION INDUSTRIELLE DE DISQUES DE PATE SUR UNE LIGNE DE PRODUCTION

(43) Veröffentlichungstag der Anmeldung: 04.01.2017
(73) Patentinhaber: Prim As Tiefkühlprodukte Gesellschaft m.b.H., 6405 Oberhofen (AT)
(72) Erfinder: Laimer, Martin, 6406 Oberhofen (AT)
(74) Vertreter: Wasmuth, Rolf

(56) Entgegenhaltungen:
- EP-A1- 1 153 714
- WO-A1-99/15020
- DE-A1- 2 261 115
- US-A1- 2004 149 545
- US-A1- 2005 258 019

## Beschreibung

Die Erfindung betrifft eine Fertigungsvorrichtung mit einem Transportband zur industriellen Fertigung eines flachen Backwerks, insbesondere zur Fertigung von Teigscheiben an einem Fließband nach dem Oberbegriff des Anspruchs 1.

Bekannte Fertigungsvorrichtungen nutzen ein Transportband, welches fertig belegte Teigscheiben längs der Fertigungsstraße zu einer Übergabestation fördert, um die Teigscheibe weiter zu verarbeiten.

Es ist bekannt, Teiglinge in eine Backform zu geben und mittels eines Stempels in die Form zu pressen, um eine flache, runde Teigscheibe zu erhalten. Die gepresste Teigscheibe wird zusammen mit der Form auf dem Transportband längs der Fertigungsstraße geführt und z. B. in einem Ofen vorgebacken. Die Form muss am Ende des Transportbandes von der Teigscheibe getrennt werden, um dann die Formen wieder zum Anfang der Fertigungsstraße zurück zu bringen, was zeit- und kostenaufwändig ist.

Die WO 9915020 A1 offenbart eine Fertigungsvorrichtung nach dem Oberbegriff des Anspruchs 1. Aus der US 2005/258019 A1 ist eine Anlage mit einem Transportband bekannt, die einteilig mit dem Transportband ausgebildete Aufnahmen aufweisen, die mit dem Transportband umlaufen. Die dargestellten Aufnahmen sind zur Fertigung runder Teigscheiben nicht geeignet; zum Auslösen roher Teiglinge aus einer Form gibt die Druckschrift keine Hinweise.

Der Erfindung liegt die Aufgabe zugrunde, eine Fertigungsanlage anzugeben, bei der der Aufwand zur industriellen Fertigung von flachen Teigscheiben reduziert ist.

Die Aufgabe wird erfindungsgemäß durch eine Fertigungsanlage nach dem Anspruch 1 gelöst.

Die erfindungsgemäße Fertigungsvorrichtung umfasst ein Transportband zwischen einem einen Teigling zuführenden Zuführband und einer Übergabestation mit einem abführenden Übergabeband für ein gefertigtes Backwerk. Das Transportband ist zwischen Umlenkrollen endlos geführt und bildet ein Obertrum sowie ein Untertrum aus. Das Obertrum läuft in Laufrichtung von dem Zuführband zu der Übergabestation; das Untertrum läuft von der Übergabestation zurück zum Zuführband. Zwischen dem Ende des Obertrums des Transportbandes und dem abführenden Übergabeband ist ein Übergabespalt ausgebildet, der eine in Laufrichtung gemessene Spaltbreite aufweist. Die Spaltbreite des Übergabespaltes muss für den Durchtritt der Randform in Laufrichtung des Transportbandes ausreichend breit ausgebildet sein. Am Übergabespalt wird durch die Verformung des elastischen Randes beim Durchtritt durch den Spalt ein einfaches Lösen des Backwerks aus der Form erzielt, so dass das Backwerk vom Übergabeband sicher aufgenommen werden kann.

Am Übergabespalt ist der Umlenkdurchmesser des Obertrums in Richtung zum Untertrum im Bereich von 30 mm bis 80 mm ausgebildet. Vorteilhaft wird ein Umlenkdurchmesser von 60 mm vorgesehen.

Am Übergabespalt liegt der Umlenkdurchmesser des Übergabebandes im Bereich von 10 mm bis 40 mm, insbesondere bei 20 mm. Dadurch ist eine sichere Aufnahme des Backwerks durch das Übergabeband gewährleistet.

Am Übergabespalt wird das Obertrum des Transportbandes über zwei Umlenkdurchmesser in das Untertrum überführt. Der Umschlingungswinkel im Bereich eines Umlenkdurchmessers am Übergabespalt erstreckt sich über etwa 110° bis 150°.

Zur Fertigung eines Backwerks mit einem konstruktiv ausgebildeten Rand - bevorzugt mit Füllung - ist vorgesehen, über das Zuführband ausgewalzte Teiglinge zuzuführen, deren Durchmesser größer als der Außendurchmesser der Randform ist.

Das Transportband der Fertigungsvorrichtung besteht aus einem flexiblen Trägergurt sowie zumindest einer auf dem Trägergurt getragenen Randform mit einem ein Backwerk oder eine Teigscheibe begrenzenden Rand, wobei die Randform eine der Form und den Außenabmessungen des zu fertigenden Backwerks angepasste Gestalt aufweist. Der Rand der Randform besteht aus einem elastischen Material, wobei der Rand mit dem Trägergurt einteilig ausgebildet ist, z. B. auf diesem durch Kleben befestigt ist.

Die z. B. einen Teigboden begrenzende Randform ist fest mit dem Trägergurt verbunden und läuft mit diesem längs der Fertigungsstraße als Obertrum und Untertrum um. Die Randformen verbleiben auf dem Trägerband, so dass ein getrennter Rücktransport der Randformen entfällt.

Die elastische Ausbildung der Randform ermöglicht am Ende des Transportbandes einen kleinen Umlenkdurchmesser, so dass das in der Randform gefertigte Backwerk leicht aus der Randform gelöst und weitertransportiert werden kann.

Die Randform ist vorteilhaft eine Rundform mit einem geschlossenen Rand. Der Boden der Randform ist insbesondere von dem Trägerband selbst gebildet. Das Trägerband kann eine Wabenstruktur auf der Oberfläche aufweisen, um ein einfaches Lösen des in der Randform gefertigten Backwerks zu gewährleisten.

In vorteilhafter Ausbildung ist der Querschnitt des Randes trapezförmig ausgebildet, wobei die Grundseite des Trapezes auf dem Trägerband festliegt. Die Trapezform gewährleistet, dass sich der Durchmesser der Randform zum oberen Ende erweitert, so dass sich das in der Randform gefertigte Backwerk einfach auslösen lässt.

Die Höhe des Randes der Randform entspricht vorteilhaft dem Mehrfachen der Dicke des Transportbandes. Es kann zweckmäßig sein, dass das Transportband und der auf dem Transportband fixierte Rand aus einem gleichen Material bestehen. Der Rand der Randform besteht insbesondere aus elastischem Kunststoff, vorteilhaft aus Polyethylen.

Um eine hohe Produktivität zu gewährleisten und ein störungsfreies Umlenken des Transportbandes als Endlosband sicherzustellen, ist vorgesehen, in Laufrichtung des Transportbandes mehrere Randformen anzuordnen, die in Laufrichtung mit einem äquidistanten Abstand zueinander liegen. Auch quer zur Laufrichtung des Transportbandes können mehrere Randformen vorgesehen sein, wobei die quer zum Transportband nebeneinander liegenden Randformen mit seitlichem Abstand zueinander liegen. Der in Laufrichtung vorgesehene Abstand aufeinander folgender Randformen ist vorteilhaft größer als der quer zur Laufrichtung gemessene seitliche Abstand benachbarter Randformen.

Weitere Merkmale ergeben sich aus den weiteren Ansprüchen, der Beschreibung und der Zeichnung, in der ein Ausführungsbeispiel eines Transportbandes in einer erfindungsgemäßen Fertigungsvorrichtung mit dem Transportband dargestellt sind. Es zeigen:
- Fig. 1: eine schematische Seitenansicht auf ein Transportband in einer Fertigungsvorrichtung zur industriellen Fertigung eines flachen Backwerks an einem Fließband,
- Fig. 2: eine Draufsicht auf die schematische Fertigungsvorrichtung nach Fig. 1,
- Fig. 3: eine schematische Seitenansicht auf ein Transportband für eine Fertigungsvorrichtung nach Fig. 1,
- Fig. 4: eine Draufsicht auf das Transportband gemäß der schematischen Darstellung in Fig. 3,
- Fig. 5: eine Draufsicht auf ein Obertrum des Transportbandes,
- Fig. 6: eine schematische Seitenansicht des endlos umlaufenden Transportbandes mit Obertrum und Untertrum,
- Fig. 7: eine vergrößerte Darstellung der Einzelheit VII in Fig. 6,
- Fig. 8: ein schematischer Schnitt durch ein Transportband mit einer einteilig ausgebildeten Randform,
- Fig. 9: in vergrößerter Darstellung einen schematischen Schnitt durch den Rand einer Randform,
- Fig. 10: in schematischer Darstellung eine Seitenansicht auf eine Übergabestation am Ende des Transportbandes,
- Fig. 11: in vergrößerter Darstellung die Einzelheit XI in Fig. 10,

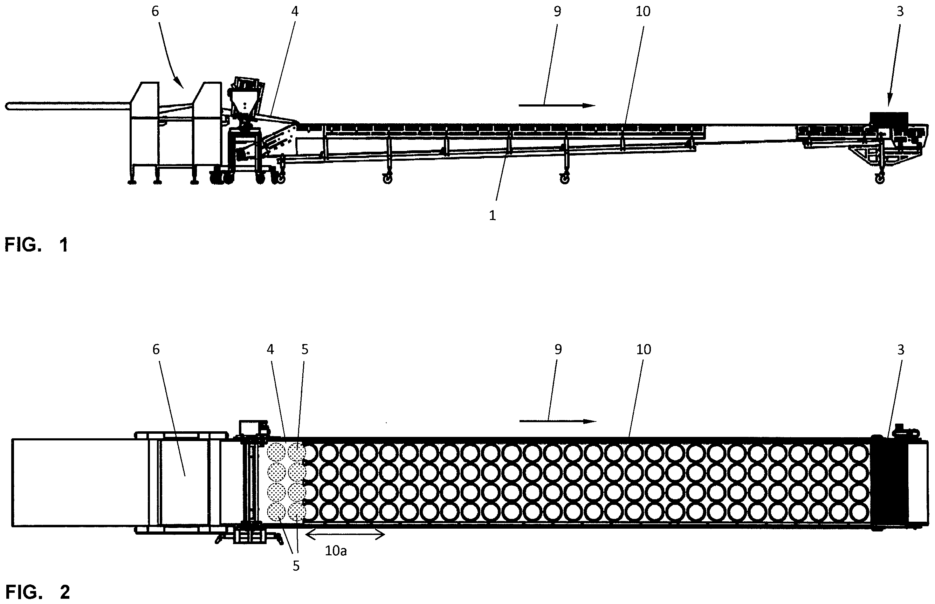

Die in den Fig. 1 und 2 schematisch wiedergegebene Fertigungsvorrichtung zur industriellen Fertigung einer Teigscheibe, eines flachen Backwerks oder dgl. ist insbesondere zur Fertigung von belegten Teigböden an einem Fließband vorgesehen. Die Fertigungsstation weist als zentrale Einheit ein Transportband 10 auf, welches an einem Rahmen 1 geführt wird und gehalten ist.

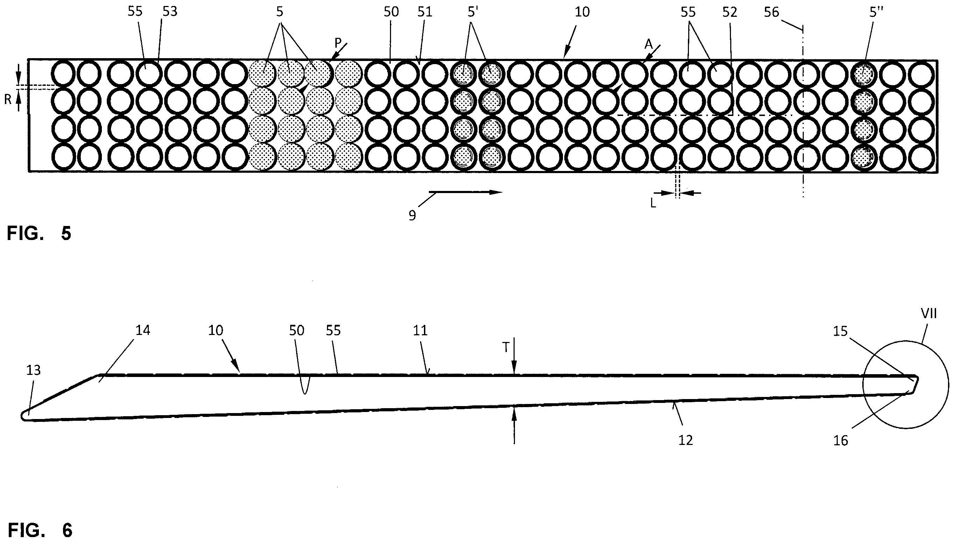

Das Transportband 10 ist zwischen einem Zuführband 4 für Teiglinge 5 und einer Übergabestation 3 angeordnet. Das Transportband 10 ist in Laufrichtung 9 angetrieben. Die Teiglinge 5 sind - wie die Fig. 2 und 5 zeigen - vorzugsweise ausgewalzte Teiglinge 5 und bilden Teigscheiben, Teigböden oder ein flaches Backwerk.

Die Teiglinge 5 werden beispielhaft in einer Vorfertigung 6 zu den in Fig. 2 gezeigten ausgewalzten Teiglingen 5 verarbeitet und über das Zuführband 4 zugeführt.

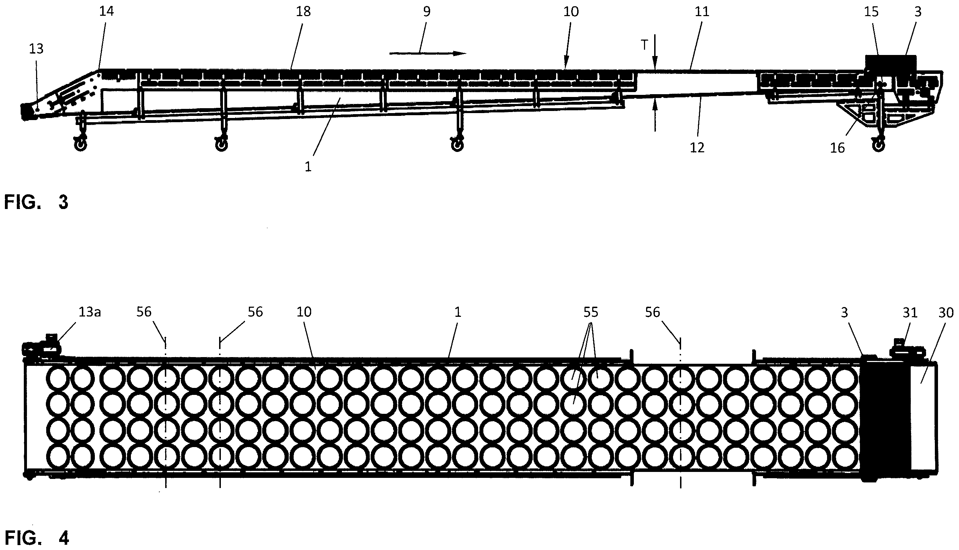

Wie Fig. 3 zeigt, ist das auf dem Rahmen 1 geführte Transportband 10 endlos umlaufend montiert, wobei das Transportband 10 ein in Laufrichtung 9 laufendes Obertrum 11 und ein entgegen Laufrichtung 9 zurücklaufendes Untertrum 12 ausbildet. Das Obertrum 11 des Transportbandes 10 erstreckt sich von dem Zuführband 4 bis zur Übergabestation 3; das Untertrum 12 erstreckt sich in Gegenrichtung von der Übergabestation 3 zum Zuführband 4. Im Übergangsbereich vom Obertrum 11 zum Untertrum 12 bzw. vom Untertrum 12 zum Obertrum 11 sind Umlenkrollen 13, 14, 15, 16 vorgesehen. Dabei ist der senkrechte Abstand der Umlenkrollen 15 und 16 im Bereich der Übergabestation 3 geringer als der Abstand der Umlenkrollen 13 und 14 im Bereich des Zuführbandes 4. Der zwischen dem Obertrum 11 und dem Untertrum 12 gebildete Abstand T nimmt entgegen der Laufrichtung 9 zu. Im gezeigten Ausführungsbeispiel ist der Abstand T im Bereich der Übergabestation 3 am kleinsten. Der Abstand T wächst im Ausführungsbeispiel stetig bis zur vorderen Umlenkrolle 13 des Untertrums 12 an.

Das Transportband 10 ist über die Länge des Rahmens 1 durch Transportrollen 18 abgestützt; in einem Teilbereich 19 läuft das Obertrum 11 weitgehend frei.

Wie die Draufsicht in Fig. 4 zeigt, ist das Transportband 10 im Bereich des Zuführbandes 4 über einen Antriebsmotor 13a angetrieben; das in der Übergabestation 3 vorgesehene Übergabeband 30 ist durch einen vom Transportband 10 getrennten Antrieb 31 angetrieben.

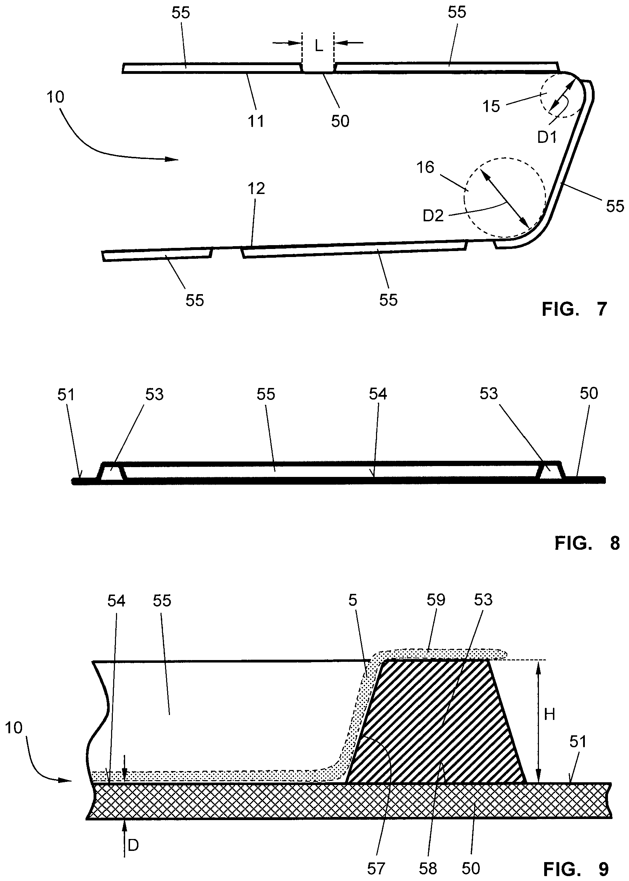

Das Transportband 10 besteht aus einem flexiblen Trägergurt 50, auf dessen einer Trägerseite 51 Randformen 55 angeordnet sind. Im gezeigten Ausführungsbeispiel liegen - wie Fig. 5 zeigt - quer zur Laufrichtung 9 vier Randformen 55 in einer Reihe 56; die Reihe 56 liegt vorzugsweise rechtwinklig zur Längsmittelachse 52 des Transportbandes 10. In Richtung der Längsmittelachse 52 sind aufeinanderfolgende Reihen 56 von Randformen 55 angeordnet, wobei die in Laufrichtung 9 aufeinanderfolgenden Randformen 55 einen Abstand L voneinander aufweisen. Dieser Abstand L ist insbesondere in Fig. 7 und 12 dargestellt.

Wie Fig. 5 ferner zeigt, liegen die Randformen 55 mit einem Abstand R in der Reihe 56 nebeneinander. Der in Laufrichtung 9 vorgesehene äquidistante Abstand L aufeinander folgender Randformen ist größer als der quer zur Laufrichtung 9 gemessene seitliche Abstand R benachbarter Randformen 55.

In Fig. 5 sind die Teiglinge 5 als ausgewalzte Teiglinge dargestellt; die Verwendung von in anderer Weise vorgeformten Teiglingen ist ebenfalls möglich.

Das Transportband 10 ist aus einem flexiblen Trägergurt 50 gebildet, wobei der Trägergurt 50 die Randformen 55 trägt, die in ihrer Form und in ihren Abmessungen dem fertigen Backwerk angepasst sind. Die Randform 55 und der Trägergurt 50 sind einteilig ausgebildet. Eine einteilige Ausbildung wird zum Beispiel erreicht, indem die Randform 55 auf den Trägergurt 50 aufgeklebt oder in anderer Weise bleibend befestigt wird. Wesentlich dabei ist, dass die Randformen 55 an ihrer Position auf dem Trägergurt 50 festliegen, unabhängig davon, ob die Randform 55 auf dem Obertrum 11 in Laufrichtung 9 von dem Zuführband 4 zur Übergabestation 3 läuft oder in Gegenrichtung vom Untertrum 12 von der Übergabestation 3 zum Zuführband 4 zurückläuft. Die Randform 55 ist ortsfest auf dem Trägergurt 50 des Transportbandes 10 festgelegt. Die Randform 55 bewegt sich mit dem Transportband 10 in Laufrichtung 9.

Die Randform 55 muss die Umlenkung des Obertrums 11 zum Untertrum 12 erlauben, ohne dass die Laufruhe des Transportbandes 10 beeinträchtigt ist oder es zu einer Zerstörung der Randform 55 kommt. Daher ist vorgesehen, den Rand 53 der Randform 55 aus einem elastischen Material zu fertigen. Die Randform 55 kann aufgrund der Ausbildung aus elastischem Material den Umlenkdurchmessern D1, D2 des endlos umlaufenden Transportbandes 10 folgen. Ein geeignetes elastisches Material ist Kunststoff, z. B. Polyethylen.

Wie zum Beispiel die Fig. 4 und 5 zeigen, ist die Randform 55 eine Rundform mit einem geschlossenen Rand 53. Wie die Fig. 7 bis 9 zeigen, ist der Boden 54 einer Randform 55 vom Trägerband 50 selbst gebildet. Im gezeigten Ausführungsbeispiel ist der Querschnitt des Randes 53 trapezförmig ausgebildet; Fig. 9 zeigt den Querschnitt des Randes 53 als insbesondere gleichschenkliges Trapez 57. Andere Querschnitte können vorteilhaft sein.

Im gezeigten Ausführungsbeispiel ist der Querschnitt derart vorgesehen, dass die Grundseite 58 des Trapezes 57 auf der Trägerseite 51 des Trägergurtes 50 festgelegt ist, insbesondere festgeklebt ist. Es kann vorteilhaft sein, den Rand 53 der Randform 55 einteilig mit dem Trägergurt 50 auszubilden. Zweckmäßig besteht das Transportband 10 bzw. der Trägergurt 50 und der auf dem Trägergurt 50 gehaltene Rand der Randform 55 aus dem gleichen Material.

Ein vorteilhaftes Material für den Rand 53 einer Randform 55 ist elastischer Kunststoff, insbesondere Polyethylen. Die Höhe H des Randes 53 einer Randform 55 entspricht dem Mehrfachen der Dicke d des Trägergurtes 50.

Aufgrund der Ausbildung der Randform 55 aus elastischem Material kann das Obertrum 11 des Transportbandes 10 über Umlenkrollen 15 und 16 in das Untertrum 12 überführt werden, wie die vergrößerte Einzelheit VII in Fig. 7 zeigt. Dabei ist wesentlich, dass der Umlenkdurchmesser D1, mit dem das Obertrum 11 endet, sehr klein gewählt werden kann. Im Ausführungsbeispiel ist der Umlenkdurchmesser D1 des Obertrums 11 in Richtung zum Untertrum 12 im Bereich von 20 mm bis 80 mm gewählt. Zweckmäßig ist ein Umlenkdurchmesser von 60 mm.

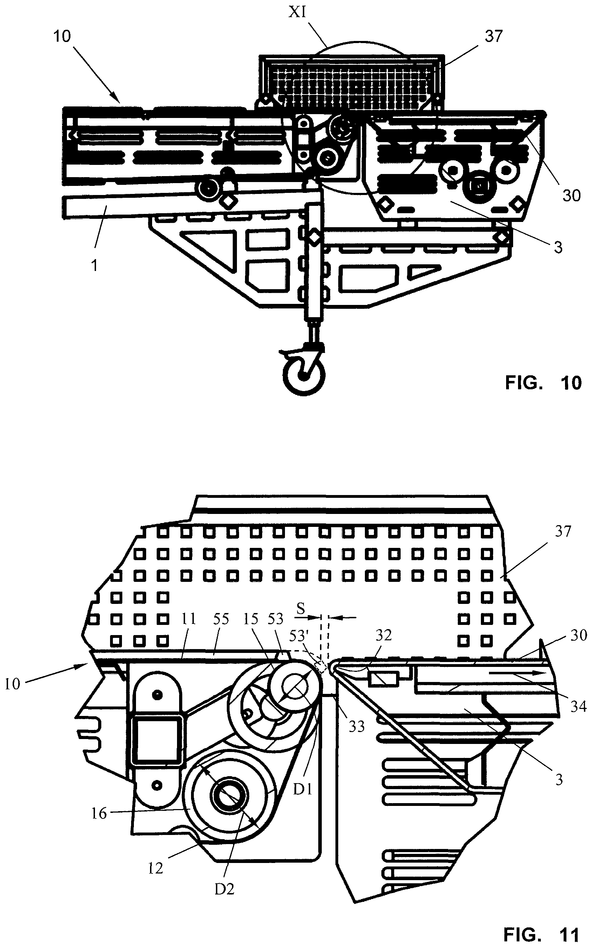

Ein kleiner Umlenkdurchmesser am Ende des Obertrums 11 ist entscheidend dafür, dass das in der Randform 55 gefertigte flächige Backwerk aus der Randform 5 gelöst und an das Übergabeband 30 weitergegeben werden kann. Diese Problematik ist in den Fig. 10 und 11 im Einzelnen wiedergegeben.
Fig. 10 zeigt in Seitenansicht das Ende des Transportbandes 10 in der Übergabestation 3;
Fig. 11 gibt die vergrößerte Einzelheit aus Fig. 10 wieder.

Zwischen dem Transportband 10 und dem Übergabeband 30 ist ein Übergabespalt 33 mit einer Spaltbreite S ausgebildet. Die Spaltbreite S ist derart gewählt, dass der Rand 53 einer Randform 55 den Übergabespalt 33 passieren kann. Zweckmäßig entspricht die Spaltbreite S der Höhe H des Randes 53. Um eine Kollision mit dem Übergabeband 30 sicher zu vermeiden, kann die Spaltbreite S um 3% bis 10% breiter als die Höhe H des Randes 53 ausgebildet sein. Zur Sicherheit kann der Übergabespalt 33 durch ein Schutzgitter 37 abgedeckt sein.

Das Übergabeband 30 ist bevorzugt ein Gliederband, wodurch ein sehr kleiner Umlenkdurchmesser 32 von 20 mm bis 40 mm, insbesondere 30 mm möglich ist. Dadurch kann ein zugeführtes Backwerk 5 sicher gegriffen werden und auf dem Übergabeband 30 in Förderrichtung 34 abgeführt werden.

Das Obertrum 11 des Transportbandes 10 wird mit dem Umlenkdurchmesser D1 der Umlenkrolle 15 in Richtung zum Untertrum 12 abgeführt. Der zwischen dem Transportband 10 und dem abführenden Übergabeband 30 ausgebildete Übergabespalt 33 lässt den Durchtritt der Randform 55 zu, so dass die Randform 55 zusammen mit dem Transportband 10 endlos umläuft. Beim Durchtritt durch den Übergabespalt 33 wird die Randform 55 elastisch verformt. Die elastische Verformung erleichtert das Auslösen des gefertigten flachen Backwerks 5 aus der Randform 55, wodurch eine Übergabe auf das Übergabeband 30 sichergestellt ist. Das Backwerk 5 löst sich leicht aus der Randform 55, wodurch das Übergabeband 30 im Bereich des Umlenkdurchmessers 32 den Rand des flächigen Backwerks 5 aufnehmen und in Förderrichtung 34 abführen kann.

Wie in Fig. 11 strichliert angedeutet, wird die Randform 55 beim Eintritt in den Übergabespalt 33 elastisch verformt. Eine Weitergabe des flächigen Backwerks 5 im rohen Zustand auf das Übergabeband 30 ist gewährleistet. Die Weitergabe über den Übergabespalt 33 ist auch bei hohen Laufgeschwindigkeiten des Transportbandes 10 sicher.

Wie Fig. 11 zeigt, ist der Umlenkdurchmesser 32 des Übergabebandes 30 am Übergabespalt 33 kleiner als der Umlenkdurchmesser D1 des Transportbandes 10 am Übergabespalt 33. Die der Umlenkrolle 15 am Übergabespalt 33 folgende Umlenkrolle 16 des Transportbandes 10 hat einen größeren Umlenkdurchmesser D2; bevorzugt ist der Umschlingungswinkel des Transportbandes 10 auf der am Übergabespalt 33 liegenden Umlenkrolle 15 größer als der Umschlingungswinkel an der nachfolgenden Umlenkrolle 16. Im Ausführungsbeispiel beträgt der Umschlingungswinkel des Transportbandes 10 auf der Umlenkrolle 15 etwa 110° bis 150°, insbesondere 135°.

Die als Teigböden den Randformen 55 zugeführten Teiglinge 5 sind größer als die Randformen 55 vorgesehen. Die ausgewalzten Teiglinge 5 haben einen Durchmesser P, der größer als der Außendurchmesser A einer Randform 55 ist. Wie in Fig. 9 dargestellt, liegt der flächig ausgewalzte Teigling 5 somit derart, dass er über den Innenrand der Randform 55 übersteht; im Ausführungsbeispiel nach Fig. 9 liegt der Teigrand 59 des Teiglings 5 über dem Rand 53 der Randform 55.

Die so aufgelegten Teiglinge 5 werden im Bandbereich 10a von einer Bedienungsperson in eine Produktionslage in der Randform 55 gedrückt. Diese Lage der Teiglinge ist in Fig. 5 dargestellt.

## Patentansprüche

1. Fertigungsvorrichtung mit einem Transportband (10) zur industriellen Fertigung eines flachen Backwerks, insbesondere zur Fertigung von Teigscheiben an einem Fließband, wobei das Transportband (10) aus einem flexiblen Trägergurt (50) sowie zumindest einer auf dem Trägergurt (50) getragenen Randform (55) mit einem das Backwerk (5) begrenzenden Rand (53) besteht, wobei die Randform (55) eine der Form und den Außenabmessungen des zu fertigenden Backwerks (5) angepasste Gestalt aufweist, und das Transportband (10) zwischen einem einen Teigling (5) zuführenden Zuführband (4) und einer Übergabestation (3) mit einem abführenden Übergabeband (30) für ein gefertigtes Backwerk (5) angeordnet ist, wobei das Transportband (10) zwischen Umlenkrollen (13, 14, 15, 16) endlos umläuft und ein Obertrum (11) sowie ein Untertrum (12) ausbildet, und das Obertrum (11) in Laufrichtung (9) von dem Zuführband (4) zu der Übergabestation (3) läuft und das Untertrum (12) von der Übergabestation (3) zurück zum Zuführband (4) läuft,
**dadurch gekennzeichnet, dass** der Rand (53) der auf dem Trägergurt (50) getragenen Randform (55) aus einem elastischen Material besteht und mit dem Trägergurt (50) einteilig ausgebildet ist, wobei zwischen dem Transportband (10) und dem abführenden Übergabeband (30) ein Übergabespalt (33) ausgebildet ist, der eine in Laufrichtung (9) gemessene Spaltbreite (S) aufweist, und dass der Rand (53) der Randform (55) beim Durchtritt durch den Übergabespalt (33) elastisch verformt wird und die Übergabe des in der Randform (55) gefertigten Backwerks (5) von dem Transportband (10) auf das Übergabeband (30) unterstützt, wobei am Übergabespalt (33) das Obertrum (11) über zwei Umlenkdurchmesser (D1, D2) in den Untertrum (12) überführt ist, und sich der Umschlingungswinkel am Umlenkdurchmesser (D1) am Übergabespalt (33) über einen Umfangswinkel von etwa 110° bis 150° erstreckt.

2. Fertigungsvorrichtung nach Anspruch 1,
**dadurch gekennzeichnet, dass** am Übergabespalt (33) der Umlenkdurchmesser (D1) des Obertrums (11) in Richtung zum Untertrum (12) im Bereich von 40 mm bis 80 mm liegt.

3. Fertigungsvorrichtung nach Anspruch 2,
**dadurch gekennzeichnet, dass** am Übergabespalt (33) der Umlenkdurchmesser (D1) des Obertrums (11) in Richtung zum Untertrum (12) 60 mm ist.

4. Fertigungsvorrichtung nach einem der Ansprüche 1 bis 3,
**dadurch gekennzeichnet, dass** am Übergabespalt (33) der Umlenkdurchmesser (32) des Übergabebandes (30) im Bereich von 10 mm bis 30 mm liegt.

5. Fertigungsvorrichtung nach einem der Ansprüche 1 bis 4,
**dadurch gekennzeichnet, dass** das Zuführband (4) ausgewalzte Teiglinge (5) zuführt, deren Durchmesser (P) größer als der Außendurchmesser (A) der Randform (55) ist.

6. Fertigungsvorrichtung nach einem der Ansprüche 1 bis 5,
**dadurch gekennzeichnet, dass** der Querschnitt des Randes (53) trapezförmig ausgebildet ist, wobei die Grundseite (58) des Trapezes (57) auf dem Trägerband (50) festliegt.

7. Fertigungsvorrichtung nach einem der Ansprüche 1 bis 6,
**dadurch gekennzeichnet, dass** die Randform (55) eine Rundform mit einem geschlossenen Rand (53) ist.

8. Fertigungsvorrichtung nach einem der Ansprüche 1 bis 7,
**dadurch gekennzeichnet, dass** der Boden (54) der Randform (55) von dem Trägerband (50) gebildet ist.

9. Fertigungsvorrichtung nach einem der Ansprüche 1 bis 8,
**dadurch gekennzeichnet, dass** die Höhe (H) des Randes (53) einem Mehrfachen der Dicke (d) des Transportbandes (50) entspricht.

10. Fertigungsvorrichtung nach einem der Ansprüche 1 bis 9,
**dadurch gekennzeichnet, dass** das Transportband (50) und der auf dem Transportband (50) ausgebildete Rand (53) aus einem gleichen Material bestehen.

11. Fertigungsvorrichtung nach einem der Ansprüche 1 bis 10,
**dadurch gekennzeichnet, dass** der Rand (53) aus einem elastischen Kunststoff wie Polyethylen besteht.

12. Fertigungsvorrichtung nach einem der Ansprüche 1 bis 11,
**dadurch gekennzeichnet, dass** in Laufrichtung (9) des Transportbandes (10) mehrere Randformen (55) angeordnet sind, die in Laufrichtung (9) mit einem äquidistanten Abstand (L) zueinander liegen.

13. Fertigungsvorrichtung nach einem der Ansprüche 1 bis 12,
**dadurch gekennzeichnet, dass** quer zur Laufrichtung (9) des Transportbandes (10) mehrere Randformen mit einem seitlichen Abstand (R) nebeneinander liegen.

14. Fertigungsvorrichtung nach einem der Ansprüche 1 bis 13,
**dadurch gekennzeichnet, dass** der in Laufrichtung (9) vorgesehene Abstand (L) aufeinander folgender Randformen (55) größer ist als der quer zur Laufrichtung (9) gemessene seitliche Abstand (R) benachbarter Randformen (55).

## Claims

1. Production apparatus with a conveyor belt (10) for the industrial production of flat baked goods, in particular for the production of dough discs at a production line, wherein the conveyor belt (10) consists of a flexible carrier belt (50) and at least one edge mould (55) carried on the carrier belt (50) and having an edge (53) bounding the baked goods (5), wherein the edge mould (55) has a shape matching the shape and the outer dimensions of the baked goods (5) to be produced and the conveyor belt (10) is located between a feed belt (4) feeding in a dough piece (5) and a transfer station (3) with a discharging transfer belt (30) for produced baked goods (5), wherein the conveyor belt (10) runs continuously between deflection rollers (13, 14, 15, 16) and forms an upper run (11) and a lower run (12) and the upper run (11) runs in the running direction (9) from the feed belt (4) to the transfer station (3) and the lower run (12) runs from the transfer station (3) back to the feed belt (4),
**characterised in that** the edge (53) of the edge mould (55) carried on the carrier belt (50) consists of an elastic material and is designed in one piece with the carrier belt (50), wherein a transfer gap (33) with a gap width (S) as measured in the running direction (9) is formed between the conveyor belt (10) and the discharging transfer belt (30), and **in that** the edge (53) of the edge mould (55) is elastically deformed when passing through the transfer gap (33) and supports the transfer of the baked goods (5) produced in the edge mould (55) from the conveyor belt (10) to the transfer belt (30), wherein the upper run (11) is transferred to the lower run (12) via two deflection diameters (D1, D2) at the transfer gap (33) and the wrap-around angle at the deflection diameter (D1) extends at the transfer gap (33) over a circumferential angle of approximately 110° to 150°.

2. Production apparatus according to claim 1,
**characterised in that** at the transfer gap (33) the deflection diameter (D1) of the upper run (11) towards the lower run (12) lies in the range of 40 mm to 80 mm.

3. Production apparatus according to claim 2,
**characterised in that** at the transfer gap (33) the deflection diameter (D1) of the upper run (11) towards the lower run (12) is 60 mm.

4. Production apparatus according to any of claims 1 to 3,
**characterised in that** at the transfer gap (33) the deflection diameter (32) of the transfer belt (30) lies in the range of 10 mm to 30 mm.

5. Production apparatus according to any of claims 1 to 4,
**characterised in that** the feed belt (4) feeds in rolled-out dough pieces (5) with a diameter (P) which is greater than the outer diameter (A) of the edge mould (55).

6. Production apparatus according to any of claims 1 to 5,
**characterised in that** the cross-section of the edge (53) is designed to be trapezoidal, the base side (58) of the trapeze (57) being fixed to the carrier belt (50).

7. Production apparatus according to any of claims 1 to 6,
**characterised in that** the edge mould (55) is a circular mould with a closed edge (53).

8. Production apparatus according to any of claims 1 to 7,
**characterised in that** the base (54) of the edge mould (55) is represented by the carrier belt (50).

9. Production apparatus according to any of claims 1 to 8,
**characterised in that** the height (H) of the edge (53) corresponds to a multiple of the thickness (d) of the conveyor belt (50).

10. Production apparatus according to any of claims 1 to 9,
**characterised in that** the conveyor belt (50) and the edge (53) formed on the conveyor belt (50) consist of the same material.

11. Production apparatus according to any of claims 1 to 10,
**characterised in that** the edge (53) consists of an elastic plastic material such as polyethylene.

12. Production apparatus according to any of claims 1 to 11,
**characterised in that** several edge moulds (55) with equidistant spacing (L) in the running direction (9) are arranged in the running direction (9) of the conveyor belt (50).

13. Production apparatus according to any of claims 1 to 12,
**characterised in that** several edge moulds (55) are placed adjacent to one another transversely to the running direction (9) of the conveyor belt (50) with a lateral spacing (R).

14. Production apparatus according to any of claims 1 to 13,
**characterised in that** the spacing (L) of consecutive edge moulds (55) as provided in the running direction (9) is greater than the lateral spacing (R) of adjacent edge moulds (55) as measured transversely to the running direction (9).

## Revendications

1. Dispositif de fabrication comprenant une bande de transport (10) pour la fabrication industrielle d'un produit de boulangerie plat, en particulier pour la fabrication de disques de pâte sur une chaîne, dans lequel la bande de transport (10) est constituée d'une courroie porteuse flexible (50) ainsi que d'au moins un moule à bord (55) porté sur la courroie porteuse (50), comprenant un bord (53) délimitant le produit de boulangerie (5), dans lequel le moule à bord (55) présente une forme adaptée à la forme et aux dimensions extérieures du produit de boulangerie (5) à fabriquer, et la bande de transport (10) est disposée entre une bande d'amenée (4) amenant un pâton (5) et un poste de transfert (3) comprenant une bande de transfert d'évacuation (30) pour un produit de boulangerie (5) fabriqué, dans lequel la bande de transport (10) circule sans fin entre des poulies de renvoi (13, 14, 15, 16) et forme un brin supérieur (11) ainsi qu'un brin inférieur (12), et le brin supérieur (11) défile dans le sens de défilement (9) de la bande d'amenée (4) jusqu'au poste de transfert (3) et le brin inférieur (12) revient du poste de transfert (3) jusqu'à la bande d'amenée (4),
**caractérisé en ce que** le bord (53) du moule à bord (55) porté sur la courroie porteuse (50) est constitué d'un matériau élastique et est formé d'un seul tenant avec la courroie porteuse (50), dans lequel il est prévu, formé entre la bande de transport (10) et la bande de transfert d'évacuation (30), une fente de transfert (33), qui présente une largeur de fente (S) mesurée dans la direction de défilement (9), et **en ce que** le bord (53) du moule à bord (55) est déformé élastiquement en passant à travers la fente de transfert (33) et aide au transfert du produit de boulangerie (5) fabriqué dans le moule à bord (55) de la bande de transport (10) sur la bande de transfert (30), dans lequel en la fente de transfert (33), le brin supérieur (11) devient le brin inférieur en passant sur deux diamètres de renvoi (D1, D2), et l'angle d'enroulement sur le diamètre de renvoi (D1) en la fente de transfert (33) s'étend sur un angle circonférentiel d'environ 110° à 150°.

2. Dispositif de fabrication selon la revendication 1,
**caractérisé en ce qu'**en la fente de transfert (33), le diamètre de renvoi (D1) du brin supérieur (11) en direction du brin inférieur (12) est situé dans la plage de 40 mm à 80 mm.

3. Dispositif de fabrication selon la revendication 2,
**caractérisé en ce qu'**en la fente de transfert (33), le diamètre de renvoi (D1) du brin supérieur (11) en direction du brin inférieur (12) est de 60 mm.

4. Dispositif de fabrication selon l'une des revendications 1 à 3,
**caractérisé en ce qu'**en la fente de transfert (33), le diamètre de renvoi (32) de la bande de transfert (30) est situé dans la plage de 10 mm à 30 mm.

5. Dispositif de fabrication selon l'une des revendications 1 à 4,
**caractérisé en ce que** la bande d'amenée (4) amène des pâtons (5) laminés dont le diamètre (P) est supérieur au diamètre extérieur (A) du moule à bord (55).

6. Dispositif de fabrication selon l'une des revendications 1 à 5,
**caractérisé en ce que** la section transversale du bord (53) a une forme trapézoïdale, dans lequel le côté de base (58) du trapèze (57) est fixe sur la bande porteuse (50).

7. Dispositif de fabrication selon l'une des revendications 1 à 6,
**caractérisé en ce que** le moule à bord (55) est un moule rond avec un bord fermé (53).

8. Dispositif de fabrication selon l'une des revendications 1 à 7,
**caractérisé en ce que** le fond (54) du moule à bord (55) est formé par la bande porteuse (50).

9. Dispositif de fabrication selon l'une des revendications 1 à 8,
**caractérisé en ce que** la hauteur (H) du bord (53) correspond à un multiple de l'épaisseur (d) de la bande de transport (50).

10. Dispositif de fabrication selon l'une des revendications 1 à 9,
**caractérisé en ce que** la bande de transport (50) et le bord (53) formé sur la bande de transport (10) sont constitués d'un même matériau.

11. Dispositif de fabrication selon l'une des revendications 1 à 10,
**caractérisé en ce que** le bord (53) est constitué d'une matière plastique élastique telle que du polyéthylène.

12. Dispositif de fabrication selon l'une des revendications 1 à 11,
**caractérisé en ce que** dans la direction de défilement (9) de la bande de transport (10) sont disposés plusieurs moules à bord (55), qui sont situés dans la direction de défilement (9) avec un écartement (L) équidistant les uns par rapport aux autres.

13. Dispositif de fabrication selon l'une des revendications 1 à 12,
**caractérisé en ce que** transversalement par rapport à la direction de défilement (9) de la bande de transport (10), plusieurs moules à bord sont situés côte à côte avec un écartement latéral (R).

14. Dispositif de fabrication selon l'une des revendications 1 à 13,
**caractérisé en ce que** l'écartement (L) de moules à bord (55) successifs prévu dans la direction de défilement (9) est supérieur à l'écartement latéral (R) de moules à bord (55) voisins mesuré transversalement par rapport à la direction de défilement (9).
